# Europäisches Patentamt

(19) **European Patent Office**

**Office européen des brevets**

(11) Publication number: **0 116 265**
**B1**

(12) **EUROPEAN PATENT SPECIFICATION**

(45) Date of publication of patent specification: **26.11.86**

(21) Application number: **83830280.0**

(22) Date of filing: **27.12.83**

(51) Int. Cl.⁴: **B 60 B 19/10, B 60 B 7/00**

(54) Motor vehicle wheel, particularly for motor cars.

(30) Priority: **13.01.83 IT 5283383 u**

(43) Date of publication of application:
**22.08.84 Bulletin 84/34**

(45) Publication of the grant of the patent:
**26.11.86 Bulletin 86/48**

(84) Designated Contracting States:
**DE FR GB SE**

(56) References cited:
**FR-A-2 506 415**
**GB-A- 247 412**
**US-A-2 441 008**

(73) Proprietor: **FIAT AUTO S.p.A.**
**Corso Giovanni Agnelli 200**
**I-10135 Torino (IT)**

(72) Inventor: **Perri, Eugenio**
**Corso Mediterraneo 136**
**I-10129 Torino (IT)**

(74) Representative: **Bosotti, Luciano et al**
**c/o Jacobacci-Casetta & Perani S.p.A.**
**Via Alfieri, 17**
**I-10121 Torino (IT)**

## Description

The present invention relates to motor vehicle wheels of the kind having a substantially planar outer face with a central recessed part which is defined peripherally by a wall with ventilation apertures.

In FR—A—2 506 415 a wheel of this kind is shown wherein the ventilation apertures defining the central recessed part of the outer face of the wheel cooperate with other apertures provided on the rim of the outer face and with further apertures and vanes inside the wheel to pomote a strong fan action ensuring ventilation of the inside of the wheel. A somewhat similar arrangement is shown in US—A—2 441 008.

The inherent problem of the present invention is that of providing a motor vehicle wheel with a shape which, in addition to improving the aerodynamic efficiency of the vehicle, ensures efficient ventilation of the devices, particularly the brake members, located within the wheel.

According to the present invention, this problem is solved by means of a motor vehicle wheel having the characteristics set forth in claim 1. Further characteristics of the invention are called for in the subclaims 2 to 6 and will emerge from the following description, given purely by way of non-limiting example, with reference to the appended drawings, in which:

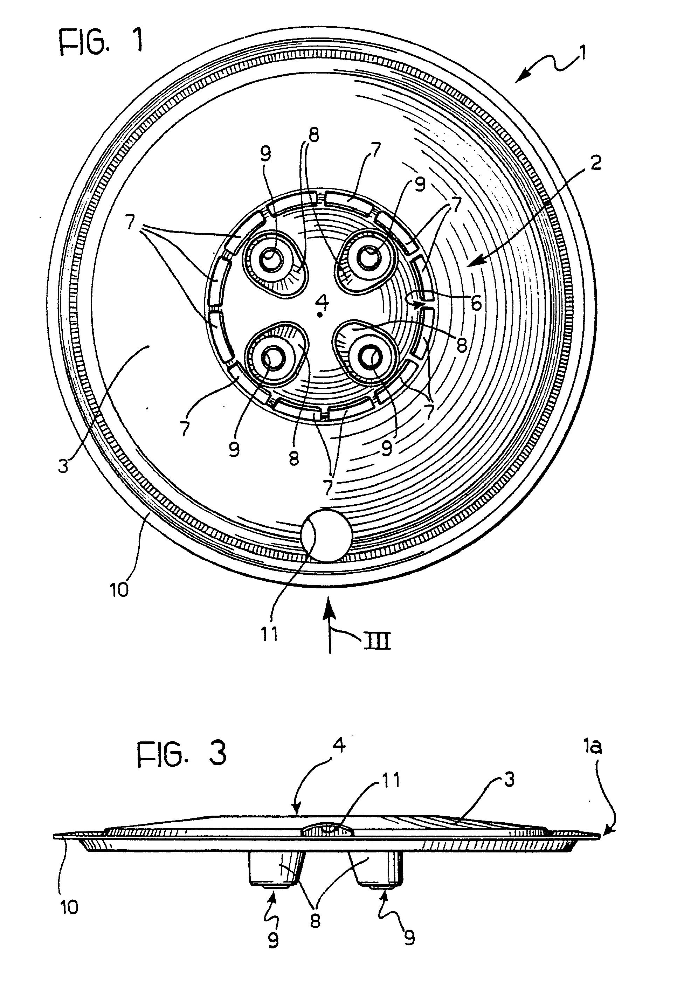

Figure 1 is a side elevational view of a wheel according to the invention;

Figure 2 is a perspective view of the outer face of the wheel of Figure 1, illustrated after the fitting of a tyre thereon, and

Figure 3 is a view taken on arrow III of Figure 1, showing a part of a wheel according to the invention.

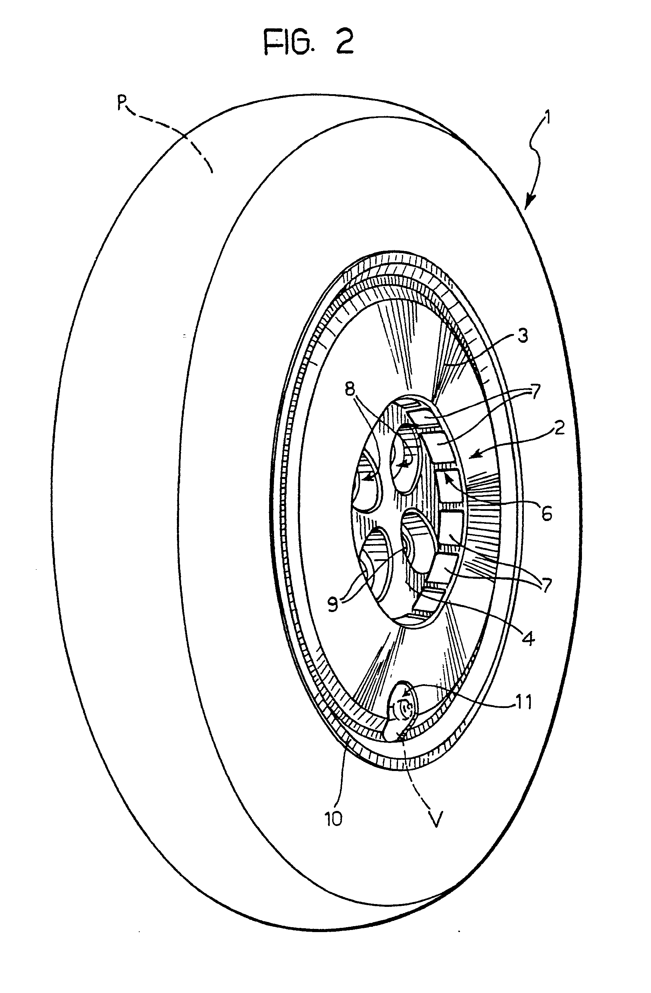

In the drawings, a wheel, generally indicated 1, is intended for assembly on a motor vehicle (not illustrated) after a tyre P, illustrated only in Figure 2, has been fitted to the wheel itself.

The wheel 1 includes a disc 2 having a face 3 which, in the assembled position of the wheel 1, faces outwardly of the motor vehicle. In the present description and in the claims which follow, the face 3 will therefore be referred to simply as the "outer face" the wheel 1.

The face 3 is generally planar with a slight convexity, and has a central recessed part 4. The periphery of the recessed part 4 is defined by a cylindrical or conical wall 6 with a ring of apertures 7 communicating with the interior of the wheel.

The apertures 7 thus allow efficient ventilation of the devices, such as the braking devices, located within the wheel 1.

The central recessed part 4 of the face 3 is provided with four sockets 8 each of which has a through-hole 9 in its base wall for a respective bolt (stud bolt) for fixing the wheel 1 to one of the hubs of the motor vehicle.

The rim 10 of the outer face 3 extends to the region corresponding to the edge of the wheel rim, that is to say, into correspondence with the outer bead of the tyre P. Thus, the junction between the peripheral part of the face 3 and the wall of the tyre P is essentially without discontinuity. This, together with the generally planar conformation of the face 3 itself, considerably improves the aerodynamic efficiency of the vehicle on which the wheel according to the invention is mounted.

In order to render the inflating valve for the tyre P (the valve schematically indicated V in Figure 2) accessible from the exterior, the periphery of the face 3 has an aperture 11.

The wheel 1 may be formed in one piece by diecasting or centrifugal casting in a material such as a light alloy or plastics: in this case, the face 3 constitutes the outer face of the integral piece.

Alternatively, as illustrated in Figure 3, the outer face 3 of the wheel 1 may be a face of a disc-shaped metal or moulded plastics plate 1a fitted removably to the rest of the wheel 1, for example, by snap-engagement with the outer rim of the wheel or by using the bolts which fix the wheel itself to the hub, that is to say, in the manner currently used for fitting wheel hub caps.

## Claims

1. Motor vehicle wheel having a substantially planar outer face (3) with a central recessed part (4) which is defined peripherally by a wall (6) with ventilation apertures (7), characterised in that said apertures (7) communicate with the interior of the wheel (1) and constitute, in use, the only substantial openings in said outer face (3), whereby the net flow of air is towards the interior of the wheel.

2. Wheel according to claim 1, characterised in that it includes a member (1a) fitted removably in the manner of a hub cap, said removable member (1a) defining the outer face (3) of the wheel (1).

3. Wheel according to claim 2, characterised in that the member (1a) is fitted by snap-engagement.

4. Wheel according to claim 1, characterised in that the recessed central part (4) has sockets (8) having through-holes (9) in their base walls for fixing bolts (stud bolts) of the wheel (1).

5. Wheel according to claim 1, particularly for tyred wheels, characterised in that the rim (10) of the outer face (3) extends to the region corresponding to the edge of the rim of the wheel (1), whereby the junction of the outer face (3) with the outer wall of the tyre (P) is substantially without discontinuity.

6. Wheel according to claim 5, characterised in that the outer face (3) has an aperture (11) which allows the inflating valve (V) for the tyre (P) to be accessible from outside the wheel.

## Patentansprüche

1. Kraftfahrzeugrad mit einer im wesentlichen ebenen Außenseite (3) mit einem zurückgesetzten Zentralbereich (4), der an seinem Umfang von einer Wandung (6) mit Belüftungsöffnungen (7) begrenzt ist, dadurch gekennzeichnet, daß die Belüftungsöffnungen (7) mit dem Innenraum des Rades (1) in Verbindung stehen und beim bestimmungsgemäßen Einsatz des Rades im wesentlichen die einzigen Öffnungen in der Außenseite (3) bilden, durch die die Nettoluftströmung zum Innenraum des Rades gelangt.

2. Kraftfahrzeugrad nach Anspruch 1, dadurch gekennzeichnet, daß die genannte Außenseite (3) des Rades (1) von einem Teil (1a) bestimmt ist, das sich nach Art einer Radkappe lösbar befestigen läßt.

3. Kraftfahrzeugrad nach Anspruch 2, dadurch gekennzeichnet, daß das Teil (1a) durch eine Schnappverbindung befestigt ist.

4. Kraftfahrzeugrad nach Anspruch 1, dadurch gekennzeichnet, daß der zurückgesetzte Zentralbereich (4) Sockelteile (8) aufweist, in deren Bodenwandungen durchgehende Bohrungen (9) für Befestigungsbolzen des Rades (1) vorgesehen sind.

5. Kraftsfahrzeugrad nach Anspruch 1, insbesondere für luftbereifte Räder, dadurch gekennzeichnet, daß der Rand (10) der Außenseite (3) in die der Kante der Felge des Rades (1) entsprechende Zone reicht, derart daß die Verbindung zwischen der Außenseite (3) und der Außenwandung des Reifens (P) im wesentlichen keine Unterbrechungen aufweist.

6. Kraftfahrzeugrad nach Anspruch 5, dadurch gekennzeichnet, daß in der Außenseite (3) eine Öffnung (11) vorgesehen ist, durch die das Ventil (V) des Reifens (P) vom Außenraum her zugänglich ist.

**Revendications**

1. Roue de véhicule automobile présentant une face extérieure (3) sensiblement plane, avec une partie centrale en retrait (4) qui est définie le long de sa périphérie par une paroi (6) munie de trous de ventilation (7), caractérisée en ce que lesdits trous (7) communiquent avec l'intérieur de la roue (1) et, en utilisation, constituent sensiblement les seules ouvertures ménagées dans ladite face extérieure (3), de sorte que l'écoulement de l'air est un flux dirigé vers l'intérieur de la roue.

2. Roue selon la revendication 1, caractérisée en ce qu'elle comprend un élément (1a) monté de façon amovible à la façon d'un enjoliveur, ledit élément amovible (1a) définissant la face extérieure (3) de la roue (1).

3. Roue selon la revendication 2, caractérisée en ce que l'élément (1a) est monté par encliquetage.

4. Roue selon la revendication 1, caractérisée en ce que la partie centrale en retrait (4) présente des douilles (8) qui présentent des trous traversants (9) dans leur paroi de base, pour le passage des vis de fixation (goujons) de la roue (1).

5. Roue selon la revendication 1, en particulier pour roues à pneumatique, caractérisée en ce que le bord (10) de la face extérieure (3) se prolonge jusque dans la région qui correspond au bord de la jante de la roue (1), de sorte que la jonction de la face extérieure (3) avec la paroi extérieure du pneumatique (P) est sensiblement dépourvue de discontinuité.

6. Roue selon la revendication 5, caractérisée en ce que la face extérieure (3) présente une ouverture (11) qui permet à la valve de gonflage (V) du pneumatique (P) d'être accessible de l'extérieur de la roue.

FIG. 1

FIG. 3

# 0 116 265

# FIG. 2